# EUROPÄISCHE PATENTSCHRIFT

(11) **EP 1 452 791 B1**
(45) Veröffentlichungstag und Bekanntmachung des Hinweises auf die Patenterteilung: **22.03.2006**
(21) Anmeldenummer: 04001548.9
(22) Anmeldetag: 26.01.2004
(51) Int. Cl.: F16L 55/48, B05B 12/14

(54) **Sensoreinrichtung an einer unter hoher Spannung stehenden Förderleitung**
Sensor device on a supply conduit under high voltage
Dispositif de détection sur une conduite de transport sous haute tension

(30) Priorität: 28.02.2003 DE 10309143
(43) Veröffentlichungstag der Anmeldung: 01.09.2004
(73) Patentinhaber: EISENMANN Lacktechnik GmbH & Co. KG, 71032 Böblingen (DE)
(72) Erfinder: Ucan, Aydin, 71634 Ludwigsburg (DE)
(74) Vertreter: Ostertag, Reinhard

(56) Entgegenhaltungen:
- EP-A- 1 172 152
- EP-A- 1 375 012
- FR-A- 1 327 274
- US-A- 2 601 248
- US-A- 3 384 512
- MUHLTHALER W: "ANWENDUNG DER MOLCHTECHNIK IN DER CHEMISCHEN INDUSTRIE" CHEMIE. INGENIEUR. TECHNIK, VERLAG CHEMIE GMBH. WEINHEIM, DE, Bd. 67, Nr. 2, 1. Februar 1995 (1995-02-01), Seiten 171-175, XP000487023 ISSN: 0009-286X

## Beschreibung

Die Erfindung betrifft eine Sensoreinrichtung an einer unter hoher Spannung stehenden Förderleitung gemäß dem Oberbegriff des Anspruches 1. Eine derartige Sensoreinrichtung ist aus EP1172152 bekannt.

Zuweilen stehen Förderleitungen unter elektrischem Potential. Ein Beispiel hierfür sind Förderleitungen für Lacke, die zu einer Spritzanlage führen, mit welcher der Lack unter Unterstützung durch ein elektrostatisches Feld auf ein Werkstück aufgebracht wird. Zum Farbwechsel in derartigen Leitungen finden Molche Verwendung, die nach Art von Verdrängerkolben einen Leitungsabschnitt von Lack leeren können, das Füllen mit einer Reinigungsflüssigkeit zulassen können und dann die Reinigungsflüssigkeit auch aus der Leitung wieder verdrängen können. Derartige Molche können auch als Trennkolben zwischen aufeinanderfolgenden unterschiedlichen Farben verwendet werden.

Diese Molche werden im normalen Betrieb der Lackieranlage in Molchstationen geparkt, so daß der Lack ungehindert durch die Lack-Förderleitung fließen kann. Für die Steuerung des Farbwechsels ist es wichtig zu erkennen, wann ein Molch seine Ruhestellung in einer Molchstation erreicht hat. Das Erreichen der Ruhestellung wird unter Verwendung von Sensoren detektiert, die auf die Gegenwart eines Molches ansprechen.

Im Hinblick auf die hohe Spannung, unter welcher die Förderleitung und damit auch die Molchstation steht, wurden bisher zur Molchdetektion Sensoren verwendet, die aus einer Batterie betrieben werden. Auf diese Weise läßt sich eine galvanische Trennung zur Umgebung auf einfache Weise realisieren. Allerdings fallen für den Betrieb der Sensoren die Kosten für die Batterien an, und der Wechsel einer Batterie bedingt immer unerwünschte Stillstandszeiten der gesamten Anlage.

Durch die vorliegende Erfindung soll daher eine Sensoreinrichtung gemäß dem Oberbegriff des Anspruches 1 so weitergebildet werden, daß die Sensoren der Sensoreinrichtung aus einem Netz gespeist werden können.

Diese Aufgabe ist erfindungsgemäß gelöst durch eine Sensoreinrichtung mit den im Anspruch 1 angegebenen Merkmalen.

Bei der erfindungsgemäßen Sensoreinrichtung kann der Sensor selbst auf hohem Potential liegen. Sowohl seine Energieversorgung als auch das Abnehmen der von ihm erzeugten Signale erfolgt unter Verwendung einer galvanischen Trennstufe. Damit können Batterien zur Energieversorgung entfallen.

Die verwendeten Sensoren können induktive Sensoren, kapazitive Sensoren, magnetbetätigte Sensoren wie Reed-Relais, mechanisch betätigte Sensoren, optische Sensoren oder andere Sensoren sein. Die letztlich erfaßte Meßgröße braucht nicht die Position eines Molches zu sein, es können auch andere interessierende Eigenschaften an der Förderleitung gemessen werden, z.B. die Temperatur des in der Förderleitung bewegten Gutes, elektrische Eigenschaften dieses Gutes, die Farbe des geförderten Gutes, der Durchsatz des geförderten Gutes usw..

Vorteilhafte Weiterbildungen der Erfindung sind in Unteransprüchen angegeben.

Bei einer Sensoreinrichtung gemäß Anspruch 2 kann man mehrere, möglicherweise auch auf unterschiedliche Meßparameter ansprechende Sensoren über eine einzige galvanische Trennstufenanordnung mit der Spannungsversorgung und der Auswerteschaltung verbinden.

Mit der Weiterbildung der Erfindung gemäß Anspruch 3 wird erreicht, daß die Wege, über welche sich ebenfalls auf hoher Spannungen liegende Verbindungskabel zur Trennstufenanordnung erstrecken, nur kurz sind.

Eine galvanische Trennung, wie sie im Anspruch 4 angegeben ist, läßt sich zu besonders geringen Kosten realisieren und ist insbesondere zur mit Leistungsübertragung verbundenen Energieversorgung der Sensoren geeignet.

Auch eine galvanische Trennung gemäß Anspruch 5 zeichnet sich durch geringe Kosten aus. Diese Kopplung ist besonders für die Signalübertragung geeignet.

Mit der Weiterbildung der Erfindung gemäß Anspruch 6 wird erreicht, daß die auf Hochspannungen liegenden Signale führenden Leiter nur einmal vorgesehen zu werden brauchen und sich nur in der unmittelbaren Umgebung der Sensoren erstrecken zu brauchen. Gemäß Anspruch 6 kann man auch eine sehr große Anzahl von Sensoren einfach mit der Auswerteschaltung verbinden.

Nachstehend wird die Erfindung anhand von Ausführungsbeispielen unter Bezugnahme auf die Zeichnung näher erläutert. In dieser zeigen:
- Figur 1:: ein Blockschaltbild einer Sensoreinrichtung, welche das Vorliegen eines Molches bei drei verschiedenen Positionen in einer Molchstation erkennen kann und von einem Netzgerät betrieben wird; und
- Figur 2:: ein ähnliches Schaltbild wie Figur 1, wobei jedoch die verschiedenen Sensoren an einen Datenbus angeschlossen sind.

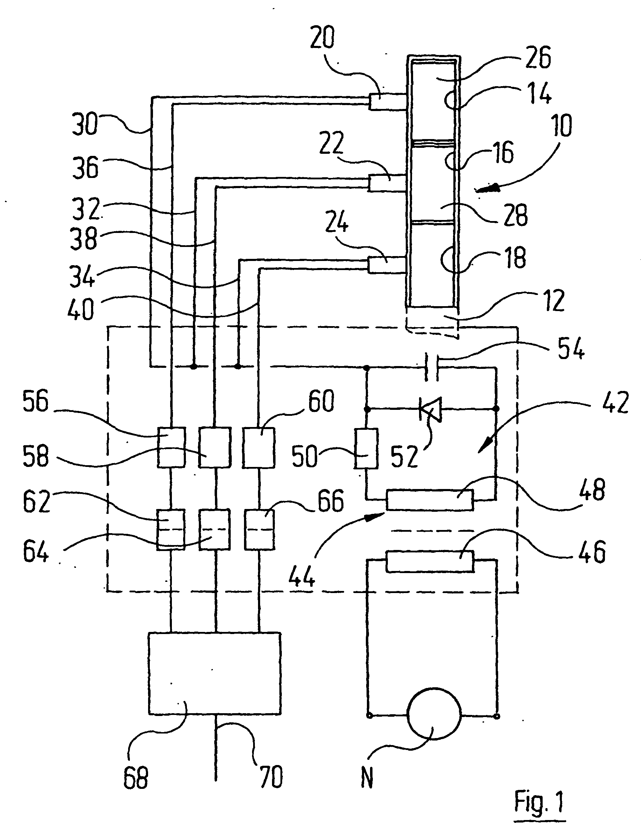

In Figur 1 ist mit 10 insgesamt eine Molchstation bezeichnet, die an das Ende einer Förderleitung 12 angeschlossen ist. Die Förderleitung 12 dient dazu, Lack, der durch eine nicht gezeigte Pumpe aus einem Vorratsbehälter angesaugt wird, zu einer nicht gezeigten Spritzanlage zu fördern, aus welcher der Lack unter zusätzlicher Unterstützung durch ein elektrostatisches Feld auf ein Werkstück, z.B. eine Karosserie aufgetragen wird.

Die Molchstation 10 hat drei Parkbereiche 14, 16, 18, die jeweils mit einem Sensor 20, 22, 24 ausgestattet sind, der von der Rohrwand getragen ist. Bei den oberen Parkbereichen 14 und 16 ist jeweils ein Molch 26, 28 dargestellt.

Die Sensoren 20, 22, 24 sollen beispielsweise jeweils dann ein hochpegeliges Signal bereitstellen, wenn sich bei ihnen ein Molch befindet. Steht dort kein Molch, geben die Sensoren 20, 22, 24 ein niederpegeliges Signal ab.

An die Sensoren 20, 22, 24 sind Signalleitungen 30, 32, 34 angeschlossen, auf denen die Sensorausgangssignale stehen.

Über Speiseleitungen 36, 38, 40 werden die Sensoren mit zu ihrem Betrieb notwendiger elektrischer Energie versorgt.

Die Speiseleitungen 36, 38, 40 sind mit dem Ausgang eines insgesamt mit 42 bezeichneten Niedervolt-Netzteiles verbunden, welches z.B. eine Gleichspannung von 24 V bereitstellt, wie sie zum Betrieb vieler handelsüblicher induktiver Sensoren benötigt wird.

Das Netzteil 42 umfaßt einen Trenntransformator 44, welcher eine mit einem Wechselspannungsnetz N verbundene Primärspule 46 und eine Sekundärspule 48 aufweist, die von der Primärspule galvanisch getrennt ist. Das Ausgangssignal der Sekundärspule 48 wird über einen schematisch durch einen Widerstand 50, eine Diode 52 und einen Kondensator 54 angedeuteten Gleichrichter gleichgerichtet.

Der Trenntransformator 44 stellt eine der Versorgung dienende galvanische Trennstufe dar.

Die Signalleitungen 30, 32, 34 sind an die Eingänge von Betriebsschaltungen 56, 58, 60 angeschlossen, welche die erhaltenen Signale formen und gegebenenfalls in eine andere Signaldarstellung umsetzen, z.B. in serielle Digitaldarstellung. Hierzu können die Betriebsschaltungen 56, 58, 60 für den Fall der Verwendung mit analoge Ausgangssignale bereitstellenden Sensoren auch A/D-Wandler umfassen.

Die Betriebsschaltungen 56, 58, 60 können für den Fall von induktiven und kapazitiven Sensoren auch Oszillatoren zur Erzeugung der Wechselspannung umfassen, die für den Betrieb der Sensoren verwendet wird, und Schwellwertdetektoren zum Erkennen von Amplituden- oder Phasenänderungen in den auf den Signalleitungen 30, 32, 34 stehenden Signalen umfassen.

Die Ausgänge der Betriebsschaltungen 56, 58, 60, an welchen die aufbereiteten Ausgangssignale der Sensoren 20, 22, 24 stehen, sind mit den Eingängen von Optokopplern 62, 64, 66 verbunden, die in üblicher Weise durch ein zusammenarbeitendes Komponentenpaar aus einer LED und einer Fotodiode oder einem Fototransistor bestehen können.

Die Optokoppler 62, 64, 66 stellen eine der Signalübertragung dienende galvanische Trennstufe dar.

Die Ausgänge der Optokoppler 62, 64, 66 sind mit dem Eingang einer Auswerteschaltung 68 verbunden.

Diese kann über ein Ausgangskabel 70 eine Maschinensteuerung darüber informieren, wieviele Molche in den Parkbereichen 14, 16, 18 der Molchstation 10 stehen.

Man erkennt, daß die oben beschriebene Sensoreinrichtung zur Molchdetektion an einer Molch-Endstation ohne Batterie oder Akkumulator arbeitet, die in vorgegebenen Abständen einen Austausch notwendig machen. Die verwendeten Sensoren 20, 22, 24 können herkömmliche Niedervolt-Sensoren sein.

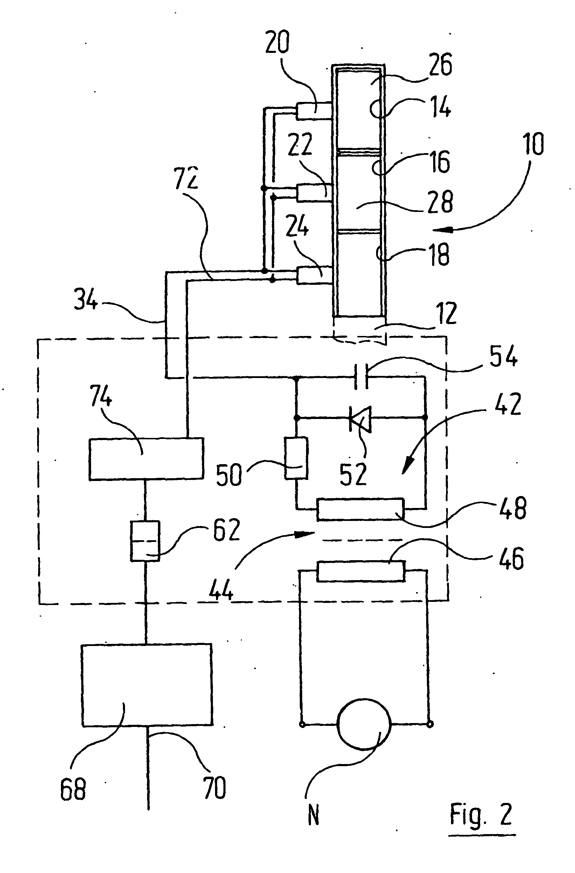

Das Ausführungsbeispiel nach Figur 2 entspricht weitgehend demjenigen nach Figur 1 mit der Maßgabe, daß die Sensoren 20, 22, 24 signalmäßig an einen gemeinsamen Datenbus 72 angeschlossen sind. An den Datenbus, 72 ist ein Buscontroller 74 angeschlossen, der die Zuschaltung der Sensoren 20, 22 und 24 an den Datenbus 72 nach einem vorgegebenen Zeitraster organisiert und die Sensoren durch einen jeweils für sie speziellen Code zur Abgabe eines Datenpaketes auffordert. Letzteres besteht aus einer Kennung für den jeweiligen Sensor und einem digitalen Meßwert.

Der Buscontroller 74 gibt an seinem Ausgang in vorgegebenen Abständen Datenpakete ab, die die Gesamtheit der von den Sensoren 20, 22, 24 gemessenen Zustände wiedergeben. Der Ausgang des Buscontrollers 74 ist an einen Optokoppler 62 angeschlossen, wie oben beschrieben.

Im übrigen arbeitet die Sensoreinrichtung nach Figur 2 ähnlich wie diejenige nach Figur 1.

In Abwandlung des Ausführungsbeispieles nach Figur 2 kann man den Optokoppler 62 auch durch eine drahtloses Modem ersetzen, welches dann die der Signalübertragung dienende Trennstufe darstellt.

## Patentansprüche

1. Sensoreinrichtung an einer unter hoher Spannung stehenden Förderleitung mit mindestens einem an der Leitung (10, 12) angeordneten Sensor (20, 22, 24), welcher ein niederpegeliges Ausgangssignal bereitstellt, und mit einer mit den Sensor-Ausgangssignalen beaufschlagten Auswerteschaltung (28), **dadurch gekennzeichnet, daß** der mindestens eine Sensor (20, 22, 24) über eine galvanische Trennstufe (44) aus einer Netzspannungsquelle (N) betrieben wird und über eine galvanische Trennstufe (62, 64, 66) oder drahtlos mit der Auswerteschaltung (68) verbunden ist.

2. Sensoreinrichtung nach Anspruch 1, **dadurch gekennzeichnet, daß** eine Mehrzahl von Sensoren (20, 22, 24) über die galvanischen Trennstufen (44, 62, 64, 66) mit der Netzspannungsquelle (N) und der Auswerteschaltung (68) verbunden sind.

3. Sensoreinrichtung nach Anspruch 1 oder 2, **dadurch gekennzeichnet, daß** die galvanischen Trennstufen (44, 62, 64, 66) in der Nachbarschaft der Sensoren (20, 22, 24) angeordnet ist.

4. Sensoreinrichtung nach einem der Ansprüche 1 bis 3, **dadurch gekennzeichnet, daß** mindestens eine der galvanischen Trennstufe (44, 62, 64, 66) einen Transformator (44) umfaßt.

5. Sensoreinrichtung nach einem der Ansprüche 1 bis 4, **dadurch gekennzeichnet, daß** mindestens eine der Trennstufen (44, 62, 64, 66) eine Optokopplereinheit (62, 64, 66) umfaßt.

6. Sensoreinrichtung nach einem der Ansprüche 2 bis 5, **dadurch gekennzeichnet, daß** die Sensoren (20, 22, 24) jeweils ein Datenpaket bereitstellen, welches ein Sensorausgangssignal und vorzugsweise auch eine Sensorkennung umfaßt, und daß die Mehrzahl von Sensoren (20, 22, 24) an einen Datenbus (72) angeschlossen ist, welcher mit einer der galvanischen Trennstufen (44, 62, 64, 66) verbunden ist.

## Claims

1. Sensor device on a feed pipeline carrying high voltage, comprising at least one sensor (20, 22, 24) that is disposed on the pipeline (10, 12) and that provides a low-level output signal, and comprising an evaluation circuit (28) to which the sensor output signals are applied, **characterized in that** the at least one sensor (20, 22, 24) is operated from a mains-voltage source (N) via an electrical isolating stage (44) and is connected to the evaluation circuit (68) via an electrical isolating stage (62, 64, 66) or wirelessly.

2. Sensor device according to Claim 1, **characterized in that** a plurality of sensors (20, 22, 24) is connected to the mains-voltage source (N) and the evaluation circuit (68) via the electrical isolating stages (44, 62, 64, 66).

3. Sensor device according to Claim 1 or 2, **characterized in that** the electrical isolating stages (44, 62, 64, 66) are disposed in the vicinity of the sensors (20, 22, 24).

4. Sensor device according to one of Claims 1 to 3, **characterized in that** at least one of the electrical isolating stages (44, 62, 64, 66) comprises a transformer (44).

5. Sensor device according to one of Claims 1 to 4, **characterized in that** at least one of the isolating stages (44, 62, 64, 66) comprises an optocoupler unit (62, 64, 66) .

6. Sensor device according to one of Claims 2 to 5, **characterized in that** the sensors (20, 22, 24) each provide a data packet that comprises a sensor output signal and, preferably, also a sensor identifier, and **in that** the plurality of sensors (20, 22, 24) is connected to a databus (72) that is connected to one of the electrical isolating stages (44, 62, 64, 66).

## Revendications

1. Dispositif de détection sur une conduite de transport sous haute tension, comprenant au moins un capteur (20, 22, 24) disposé sur la conduite (10, 12) qui met à disposition un signal de sortie de bas niveau, et un circuit d'évaluation (28) soumis aux signaux de sortie des capteurs, **caractérisé par le fait que** ledit au moins un capteur (20, 22, 24) est alimenté par une source de tension de secteur (N) par l'intermédiaire d'un étage de séparation galvanique (44) et est relié au circuit d'évaluation (28) par l'intermédiaire d'un étage de séparation galvanique (62, 64, 66) ou sans fil.

2. Dispositif de détection selon la revendication 1, **caractérisé par le fait qu'**une pluralité de capteurs (20, 22, 24) est reliée à la source de tension de secteur (N) et au circuit d'évaluation (28) par l'intermédiaire des étages de séparation galvanique (44, 62, 64, 66).

3. Dispositif de détection selon la revendication 1 ou 2, **caractérisé par le fait que** les étages de séparation galvanique (44, 62, 64, 66) sont disposés au voisinage des capteurs (20, 22, 24).

4. Dispositif de détection selon l'une des revendications 1 à 3, **caractérisé par le fait qu'**au moins un des étages de séparation galvanique (44, 62, 64, 66) comprend un transformateur (44).

5. Dispositif de détection selon l'une des revendications 1 à 4, **caractérisé par le fait qu'**au moins un des étages de séparation (44, 62, 64, 66) comprend un optocoupleur (62, 64, 66).

6. Dispositif de détection selon l'une des revendications 2 à 5, **caractérisé par le fait que** les capteurs (20, 22, 24) mettent chacun à disposition un paquet de données qui comprend un signal de sortie de capteur et de préférence aussi un identifiant de capteur, et que la pluralité de capteurs (20, 22, 24) est connectée à un bus de données (72) qui est relié à un des étages de séparation galvanique (44, 62, 64, 66).
